# EUROPEAN PATENT APPLICATION

(11) **EP 4 793 700 A1**
(43) Date of publication of application: **19.08.2026**
(21) Application number: 25158417.3
(22) Date of filing: 17.02.2025
(51) Int. Cl.: G03B 11/04, G03B 17/55, B60R 11/04

(54) **A VISION SYSTEM FOR VEHICLES AND A REAR VIEW DEVICE**

(71) Applicant: Motherson Innovations Deutschland GmbH, 70327 Stuttgart (DE)
(72) Inventor: Andrei, Stefan, 70327 Stuttgart (DE)

(57) **Abstract**

A vision system (100) for a vehicle comprising a camera (102 having a lens (104). The lens (104) may be positioned and affixed to a cone (108) by a gasket (106) to form a watertight seal. The cone (108) may have a rear portion (110) and a front portion (112). The rear portion (110) may be configured to attach the camera (102) having the lens (104). The front portion (112) of the cone (108) may have a first surface (116) and a second surface (118). The first surface (116) may be configured to have a back glass (120) attached. The second surface (118) may be configured to have a front glass (122) attached. The vision system (100) further comprising a cover (124) configured with a channel (126) around the perimeter and adhered to a front surface (128) of the back glass (120) to secure a silica gel (132).

## Description

The present disclosure relates to a vision system for a vehicle. Further, the present disclosure also relates to a rear view device comprising such a vision system.

Generally, motor vehicles have a pair of external rear view mirrors placed on either side of the vehicle to provide a view on the sides and rear of the vehicle. Further, it is observed in various developments that mirrors are being replaced with a vision system, or cameras, mounted as a standalone device to capture a field of view of the sides and rear of a vehicle. The cameras may encounter some of the same problems as traditional mirrors which requires the removal ice, snow, moisture and other contaminants. Typically, this is done by applying heat to the mirror to remove the ice, snow, moisture and other contaminants. Likewise, the vision systems are equipped with heating means for the glass components, which the cameras "look" through, to remove unwanted environmental impurities. One problem that may arise in a sealed vision system is that moisture may build up within the sealed vision system by condensation and moisture may form on the inside of the glass components which may cause the glass components to become "dirty" due to impurities in the air.

Chinese Patent 217770229U briefly and generally discloses incorporating the use of a soft silica gel as a sealing ring in the assembly of their cameras. However, this solution may not achieve desired result due to the silica gel being in the camera itself and not in the structure the lens looks through. Therefore, it does not prevent moisture from building up on the lens or the structure the lens looks through. Moisture build-up on the structure the lens looks through can cause low quality and low resolution images and videos necessary for the vision system to function to a satisfactory level.

Therefore, there is a pressing need for an innovative approach in vision systems for vehicles. Such a solution must form a watertight seal between the lens and the glass structures the lens looks through. The present disclosure provides a vision system that overcomes the shortcomings of the prior art.

In one embodiment, the present disclosure provides a vision system for a vehicle. The vision system may comprise a camera having a lens, a cone, a gasket, a back glass, a front glass, a cover and a silica gel. The cone may be configured with a rear portion and a front portion, wherein the rear portion is configured to attach the camera having the lens. The gasket is configured to affix the lens to the cone to form a watertight seal. The front portion of the cone may have a first surface and a second surface, wherein the back glass is configured to be attached to the first surface of the front portion of the cone. The front glass may be configured to be attached to the second surface of the front portion of the cone. The cover may be configured with a channel and adhered to a front surface of the back glass and the silica gel may be configured to be seated within the channel of the cover. The silica gel is configured to absorb any moisture, or contaminants present in the vision system to prevent the build-up of condensation on the front glass and/or the back glass to ensure high quality images and/or video taken by the camera through the lens.

In another embodiment, the vision system further comprises a separator having a stepping wall structure with an increasing perimeter between the back glass and the front glass. The stepping wall structure provides a reduced amount of glare on the lens of the camera to have high quality images and/or videos. Said another way, the stepping wall structure of the separator reduces a glare phenomenon, which can occur in sunny conditions, on the lens and thus obtaining high definition images and/or videos captured by the camera through the lens.

In a further embodiment, the separator comprises at least one void configured on the stepping wall structure to allow a passage of air between the front glass and the back glass. The at least one void allows air, which may contain moisture, to pass through the separator and the moisture may be absorbed by the silica gel. This would in turn may prevent the build-up of moisture and/or condensation on the front glass and/or back glass.

In another embodiment of the present disclosure, the vision system comprises a heating system for heating the front glass. The heating system heating the front glass can remove any potential environmental obstructions of the vision system, for example, ice, snow, moisture, and any combination thereof.

In yet a further embodiment, the heating system may comprise at least two bus bars each being electrically conductive and seated in at least two parallel grooves in the front portion of the cone. Additionally, at least two conductive springs each being electrically conductive and configured to be attached to the at least two bus bars and at least two contact foils each being arranged to be in contact with the conductive spring and affixed to the front glass. Furthermore, the at least two contact foils are configured to convert electrical energy into thermal energy to heat the front glass. The heating system may be configured to remove moisture, snow, ice, and other contaminants from the front glass.

In yet another embodiment, the present disclosure provides the vision system may further comprise a glue being arranged around a periphery of the second surface of the front portion to secure and seal the front glass to the second surface. The sealing of the front glass to the second surface of the cone creates a completely sealed vision system which may prevent the ingress of moisture into the vision system.

In another example, the present disclosure provides a rear view device for a vehicle, wherein the rear view device comprises at least one vision system according to any of the embodiments of the present disclosure.

In the aforementioned embodiments there are advantages over the prior art of the vision system such as the silica gel being configured to absorb any moisture, or contaminants present in the vision system to prevent the build-up of condensation on the front glass and/or the back glass to ensure high quality images and/or video taken by the camera through the lens. The stepping wall structure provides a reduced amount of glare on the lens of the camera to capture high quality images and/or videos. The sealed structure between the front glass and the back glass may be free of moisture due to the absorption properties of the silica gel. Furthermore, the heating system is configured to remove any potential environmental obstructions of the vision system, for example, ice, snow, moisture, and any combination thereof.

The foregoing summary, as well as the following detailed description, will be better understood when read in conjunction with the appended drawings. For the purpose of illustration, certain examples of the present description are shown in the drawings. It should be understood, however, that the disclosure is not limited to the precise arrangements and instrumentalities shown. The accompanying drawings, which are incorporated in and constitute a part of this specification, illustrate an implementation of system, apparatuses, and methods consistent with the present description and, together with the description, serve to explain advantages and principles consistent with the disclosure. The figures are not necessarily drawn to scale. Like numbers used in the figures refer to like components. However, it will be understood that the use of a number to refer to a component in a given figure is not intended to limit the component in another figure labelled with the same number.
Fig. 1 illustrates a perspective view of the vision system, according to an embodiment of the present disclosure;
Figs. 2 illustrates a cross-sectional view of the vision system along a plane A-A, according to an embodiment of the present disclosure;
Fig. 3 illustrates a perspective view of the vision system, according to an embodiment of the present disclosure;
Fig. 4 illustrates an exploded view of the vision system, according to an embodiment of the present disclosure; and
Fig. 5 illustrates a close view of a section of the vision system as indicated by the circle V shown in Fig. 2, according to an embodiment of the present disclosure.

The following detailed description is provided to assist the reader in gaining a comprehensive understanding of the methods, apparatuses, and/or systems described herein. Accordingly, various changes, modifications, and equivalents of the systems, apparatuses and/or methods described herein will be suggested to those of ordinary skill in the art. Also, descriptions of well-known functions and constructions may be omitted for increased clarity and conciseness.

It is to be understood that the phraseology and terminology employed herein are for the purpose of description and should not be regarded as limiting. For example, the use of a singular term, such as, "a" is not intended as limiting of the number of items. Also, the use of relational terms, such as but not limited to, "top," "bottom," "left," "right," "upper," "lower," "down," "up," "side," are used in the description for clarity and are not intended to limit the scope of the disclosure or the appended claims. Further, it should be understood that any one of the features can be used separately or in combination with other features. Other systems, methods, features, and advantages of the disclosure will be or become apparent to one with skill in the art upon examination of the detailed description. It is intended that all such additional systems, methods, features, and advantages be included within this description, be within the scope of the present disclosure, and be protected by the accompanying claims.

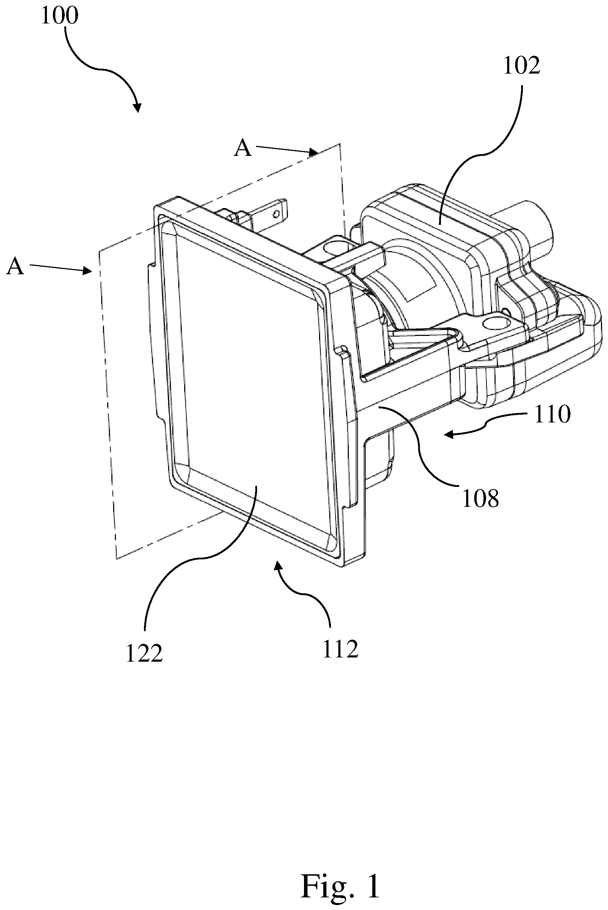

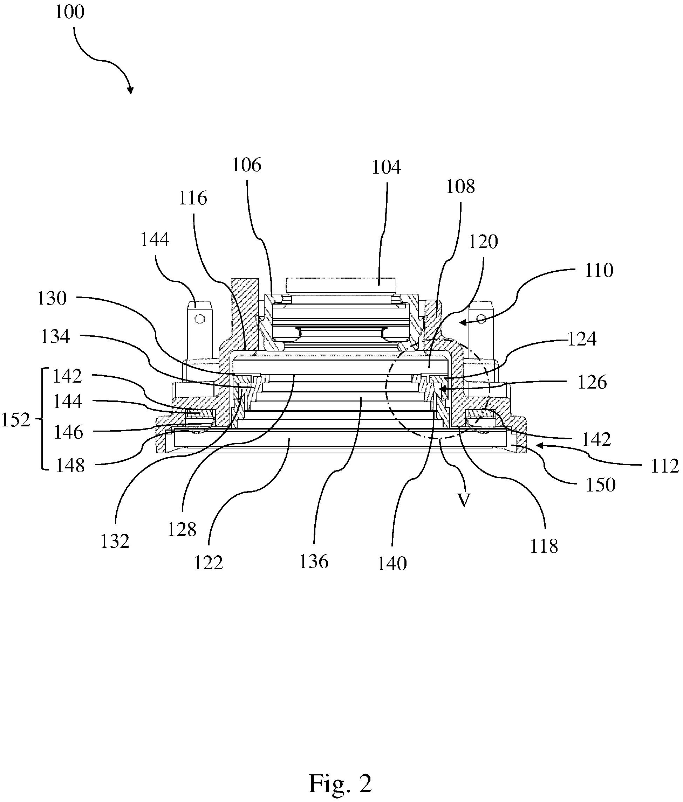

Fig. 1 illustrates a perspective view of the vision system 100 for a vehicle according to an embodiment of the present disclosure. The vision system 100 comprises a camera 102, a cone 108, a front glass 122, and a back glass 120 (shown in Fig. 2). The cone 108 may comprise a rear portion 110 and a front portion 112. The rear portion 110 of the cone 108 is configured to attach the camera 102 and the front portion is configured to attach the front glass 122 and the back glass 120.

Fig. 2 illustrates a cross-sectional view of the vision system 100. The vision system 100 comprise the camera 102 having a lens 104. The lens 104 may be positioned and affixed to the rear portion of the cone 108 by a gasket 106 to form a watertight seal. The front portion 112 of the cone 108 may have a first surface 116 and a second surface 118. The back glass 120 may be configured to attach to the first surface 116 of the front portion 112 of the cone 108. The front glass 122 may be configured to be attached to the second surface 118 of the front portion 112 of the cone 108. The vision system 100 further comprises a cover 124 configured with a channel 126 around the perimeter and adhered to a front surface 128 of the back glass 120. The cover 124 may alternatively be bonded to at least one of a step of a stepping wall structure 136 of a separator 134 (not shown). A silica gel 132 may be configured to be seated withing the channel 126 of the cover 124. The cover 124 may also be known as a cap, a ring, a seal, or other terms known in the art.

The vision system 100 may further comprise the separator 134, wherein the separator 134 may be shaped like a pyramid. The separator 134 may have the stepping wall structure 136 with an increasing perimeter. The increasing perimeter may increase going from the back glass 120 to the front glass 122. As shown in Fig. 2, the separator 134 may have at least one void 140 configured on the stepping wall structure 136 to allow a passage of air between the front glass 122 and the back glass 120. The passage of air through the at least one void 140 of the stepping wall structure 136 allows air to come into contact with the silica gel 132.

Fig. 2 further illustrates, a glue 150 configured around the periphery of the front glass 122 to secure the front glass 122 to the second surface 118 of the front portion 112 of the cone 108. The glue 150 may also be an adhesive, or other compounds with adherent and sealing properties to bond the front glass 122 to the cone 108. The sealing of the front glass 122 with the second surface 118 of the cone 108 in combination with the back glass 120 being sealed with the first surface 116 of the cone 108 may provide a watertight and airtight chamber between the front glass 122 and the back glass 120. This may prevent any moisture, debris, or other contaminant from interfering with the view of the camera 102.

In one embodiment the silica gel 132 is an amorphous and porous form of silicon dioxide, consisting of an irregular tridimensional framework of alternating silicon and oxygen atoms with nanometer-scale voids and pores. This framework allows for the silica gel 132 to absorb water vapor that may be present in the vision system 100, specifically between the back glass 120 and the front glass 122. The absorption of water vapor and other contaminants would prevent the front glass 122 and/or the back glass 120 from having water droplets and causing the image taken by camera 102 to become obstructed or blurred. Furthermore, moisture present in the vision system 100 may come into contact with airborne contaminants which may cause the front glass 122 and/or the back glass 120 to become dirty resulting in poor quality images and/or videos captured by the camera 102 though the lens 104.

Fig. 2 also illustrates, a heating system 152 for heating the front glass 122 that may remove any snow, ice, or water vapor that could be present on the outside of the front glass 122. The heating system 152 may comprise at least two parallel grooves 142 in the front portion 112 of the cone 108 and the at least two parallel grooves 142 may be configured to partially house at least two bus bars 144 that may be electrically conductive and wherein one end of the at least two bus bars 144 may be seated in one of the at least two parallel grooves 142. The other end of the at least two bus bars 144 extends outside of the cone 108 to be electrically connected to the vehicle and the vehicle provides power to the at least two bus bars 144. The ends of the at least two bus bars 144, seated in the at least two parallel grooves 142, are attached and electrically conductive with at least two conductive springs 146. The at least two conductive springs 146 may be attached and electrically conductive with at least two contact foils 148 and the at least two contact foils 148 may be affixed to the front glass 122. The at least two contact foils 148 may be configured to convert electrical energy into thermal energy to heat the front glass 122.

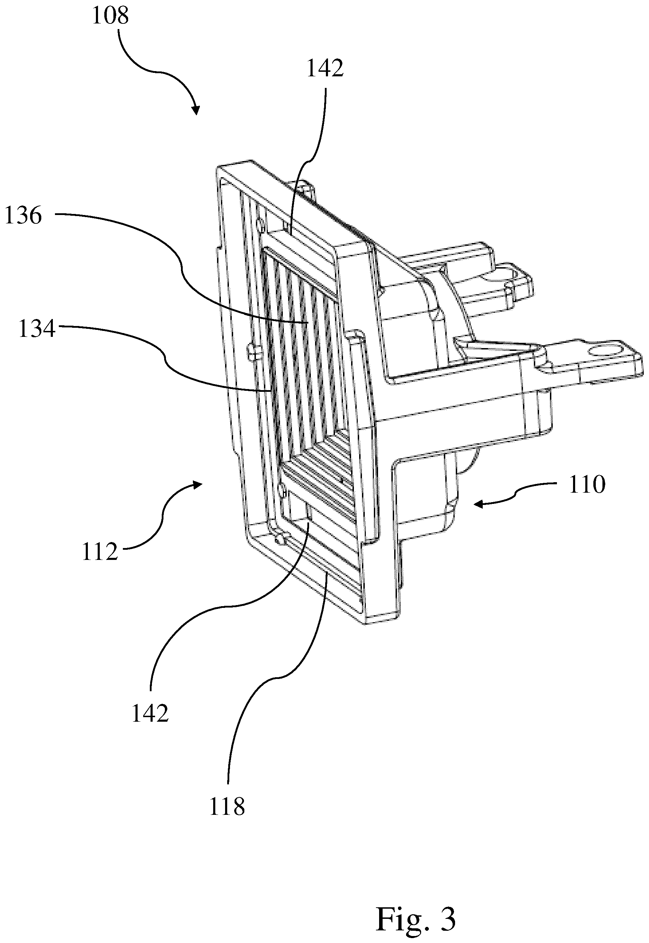

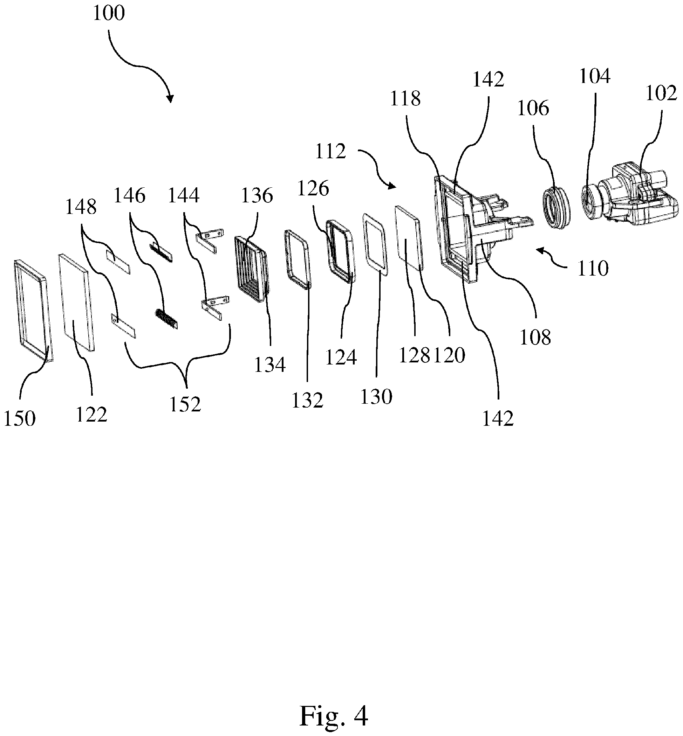

Figs. 3 illustrates a perspective view of the cone 108 of the vision system 100. The cone 108 comprises the rear portion 110 and the front portion 112. The front portion 112 may have the first surface 116 and the second surface 118. The first surface 116 may be configured to have the back glass 120 (see Fig. 2 and 4) The front portion 112 may also have the at least two parallel grooves 142. The at least two parallel grooves 142 are configured to partially house a heating system 152 (see Figs. 2, 4-5). Fig. 3 shows the cone 108 with the separator 134. Fig. 3 illustrates a perspective view of the separator 134 having the increasing perimeter of the stepping wall structure 136. The separator 134 allows for the camera 102 to maintain improved optical properties, as the separator 134 shades the camera 102 in some instances from glare.

Fig. 4 illustrates an exploded view of the vision system 100. The vision system comprises the camera 102 having the lens 104 where the gasket 106 may affix the camera 102 and the lens 104 to the cone 108. The gasket 106 may further create the airtight and watertight seal to the back glass 120. The gasket 106 may also be known by other terms that are known in the art such as, grommet, stopper, cap, covering or packing. The cone 108 may have the rear portion 110 and the front portion 112, wherein the front portion 112 may comprise the first surface 116 (see Fig. 2) and the second surface 118. The back glass 120 may be configured to be attached to the first surface 116 of the front portion 112 of the cone 108. The front surface 128 of the back glass 120 may have an adhesive 130 applied around the perimeter to affix the cover 124. The cover 124 may have the channel 126 about the circumference of the cover 124 configured for the silica gel 132 to be partially seated within the channel 126. The silica gel 132 is a moisture absorbent and may be able to remove moisture, water, or other contaminants from the vision system 100.

Fig. 4 further illustrates, the separator 134 may have the stepping wall structure 136. The stepping wall structure 136 may be positioned between the front surface 128 of the back glass 120 and the front glass 122. The stepping wall structure 136 may have the increasing perimeter. The increasing perimeter has a smaller or shorter perimeter near the back glass 120 and a larger or longer perimeter as the stepping wall structure 136 towards the front glass 122. The separator 134 may be sealed to the back glass 120 by an adhesive or other composition that may create a watertight seal between the separator 134 and the back glass 120. This sealing combined with the back glass 120 being sealed at the first surface 116 of the cone 108 and the front glass 122 being sealed to the front portion 112 of the cone 108 may create a chamber being impermeable to air, moisture, water and combinations thereof. This feature allows for the camera 102 to have an efficient performance by blocking some glare and keeping moisture and other contaminants out of the vision system 100.

Fig. 4 also illustrates the heating system 152 seated in the at least two parallel grooves 142 of the cone 108. The heating system 152 may comprise the at least two bus bars 144, electrically connected to the at least two conductive springs 146 which may be electrically connected to the at least two contact foils 148. The at least two contact foils 148 may be adhered to the front glass 122. The electricity may be supplied from the vehicle either manually with a switch or automatically when the front glass 122 may need to be heated. The electrical energy from the vehicle is transferred to the at least two bus bars 144. The electrical energy is transferred from the at least two bus bars 144 to the at least two conductive springs 146. The at least two conductive springs 146 transfer the electrical energy to the at least two contact foils 148. The at least two contact foils 148 transform the electrical energy to thermal energy. The thermal energy from the at least two contact foils 148 may transfer the thermal energy to the front glass 122 which may heat the front glass 122. The front glass 122 may need to be heated in some environmental conditions wherein there is ice, snow, fog, or another condition that prevents the front glass 122 from having a clear view of the outside of the vehicle. The front glass 122 may be secured into the cone 108 by a glue 150 or another composition that may adhere and seal the front glass 122 to the cone 108.

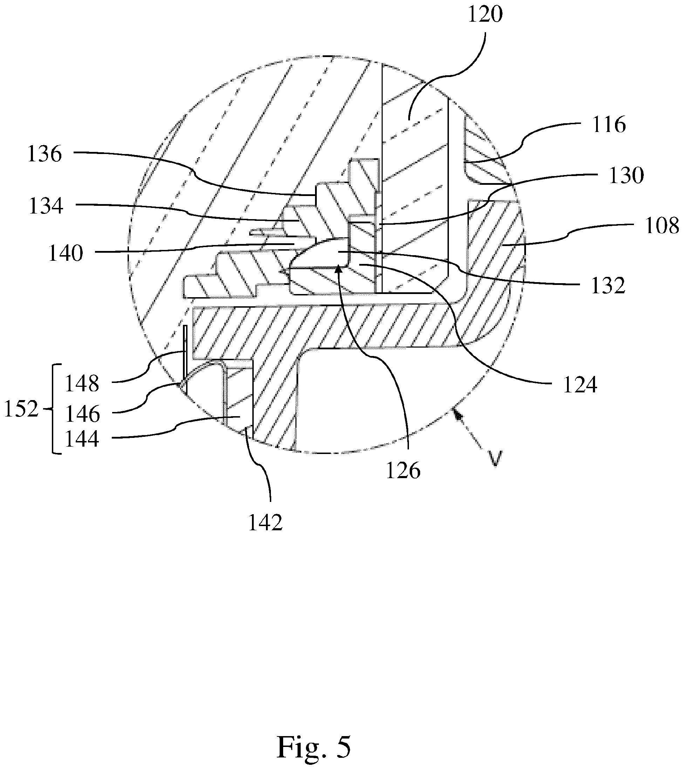

Fig. 5 illustrates a close up view of the vision system 100 as indicated by the circle V shown in Fig. 2. Fig. 5 illustrates how the components of the vision system 100 relate to each other when assembled. The cone 108 has the front portion 112 and the rear portion 110. The front portion 112 of the cone 108 may comprise the first surface 116 and the second surface 118. The back glass 120 may be affixed to the first surface 116 by a glue, a sealant, or another composition to achieve an airtight and watertight connection.

Fig. 5 further illustrate the separator 134 having a stepping wall structure 136 that may comprise the increasing perimeter. The separator 134 may also comprise the at least one void 140. The at least one void 140 allows for air, moisture, water and other contaminants travel from one side of the separator 134 to the other. On the other side of the separator 134 the cover 124 having the channel 126 and the channel 126 may have the silica gel 132 at least partially seated therein. The silica gel 132 may absorb the moisture, water, or other contaminants in the vision system 100 to prevent fog or moisture from accumulating on the front glass 122, the front surface 128 of the back glass 120, and other areas of the vision system 100. This absorption may improve the image and/or video quality captured by the camera 102 through the lens 104. Fig 5 also illustrates the heating system 152 which may comprise the at least two bus bars 144, the at least two conductive springs 146, and the at least two contact foils 148 being at least partially seated in the at least two parallel grooves 142.

Unless otherwise indicated, all numbers expressing feature sizes, amounts, and physical properties used in the specification and claims are to be understood as being modified by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein.

Although specific embodiments have been illustrated and described herein, it will be appreciated by those of ordinary skill in the art that a variety of alternate and/or equivalent implementations can be substituted for the specific embodiments shown and described without departing from the scope of the present disclosure. This application is intended to cover any adaptations or variations of the specific embodiments discussed herein. Therefore, it is intended that this disclosure be limited only by the claims and the equivalents thereof.

Furthermore, the features of the disclosure disclosed in this specification, the claims and the drawings may be employed both individually and in any possible combination for practicing the disclosure in its various exemplary embodiments. In particular, all claim feature combinations, irrespective of the claim dependencies, are covered with this application.

### LIST OF REFERENCE SIGNS

- 100: vision system
- 102: camera
- 104: lens
- 106: gasket
- 108: cone
- 110: rear portion
- 112: front portion
- 116: first surface
- 118: second surface
- 120: back glass
- 122: front glass
- 124: cover
- 126: channel
- 128: front surface
- 130: adhesive
- 132: silica gel
- 134: separator
- 136: stepping wall structure
- 140: at least one void
- 142: at least two parallel grooves
- 144: bus bar
- 146: conductive spring
- 148: contact foil
- 150: glue
- 152: heating system

## Claims

1. A vision system for a vehicle, the vision system (100) comprising:
a camera (102) having a lens (104);
a cone (108) configured with a rear portion (110) and a front portion (112), wherein the rear portion (110) is configured to attach the camera (102) having the lens (104), and the front portion (112) having a first surface (116) and a second surface (118),
a gasket (106) configured to affix the lens (104) to the cone (108) to form a watertight seal;
a back glass (120) configured to attach to the first surface (116) of the front portion (112);
a front glass (122) is configured to be attached to the second surface (118) of the front portion (112);
a cover (124) configured with a channel (126) and adhered to a front surface (128) of the back glass (120); and
a silica gel (132) configured to be seated within the channel (126) of the cover (124).

2. The vision system of claim 1, further comprising:
a separator (134) having a stepping wall structure (136) with an increasing perimeter between the back glass (120) and the front glass (122).

3. The vision system according to any of the preceding claims, wherein the separator (134) comprises at least one void (140) configured on the stepping wall structure (136) to allow a passage of air between the front glass (122) and the back glass (120).

4. The vision system according to any of the preceding claims, wherein the passage of air through the at least one void (140) of the stepping wall structure (136) of the separator (134) allows the air to contact the silica gel (132).

5. The vision system according to any of the preceding claims, wherein the silica gel (132) is configured to absorb any moisture or contaminants that are present in the air of the cone (108), between the front glass (122) and the back glass (120).

6. The vision system according to any of the preceding claims, further comprising a heating system (152) for heating the front glass (122).

7. The vision system according to claim 6, wherein the heating system (152) comprises:
at least two bus bars (144) each being electrically conductive and seated in at least two parallel grooves (142) in the front portion (112) of the cone (108);
at least two conductive springs (146) each being electrically conductive and
configured to be attached to the at least two bus bars (144); and
at least two contact foils (148) each being arranged to be in contact with the at least two conductive springs (146) and affixed to the front glass (122), wherein
the at least two contact foils (148) being configured to convert electrical energy into thermal energy to heat the front glass (122).

8. The vision system according to any of the preceding claims, further comprising:
a glue (150) arranged around a periphery of the second surface (118) of the front portion (112) to secure and seal the front glass (122) to the second surface (118) of the cone (108).

9. A rear view device for a vehicle comprising the vision system (100) according to any of the preceding claims.
